# EUROPEAN PATENT APPLICATION

(11) **EP 2 760 236 A1**
(43) Date of publication of application: **30.07.2014**
(21) Application number: 13290020.0
(22) Date of filing: 25.01.2013
(51) Int. Cl.: H04W 36/00

(54) **A method for controlling handovers of a user equipment in a heterogeneous radio access network**

(71) Applicant: Alcatel Lucent, 75007 Paris (FR)
(72) Inventor: Bakker, Hajo, 71735 Eberdingen (DE); Stanze, Oliver, 70499 Stuttgart (DE); Weber, Andreas, 74251 Lehrensteinsfeld (DE)
(74) Representative: Richardt Patentanwälte PartG mbB

(57) **Abstract**

The invention provides for a method for controlling handovers of a user equipment (202) in a heterogeneous radio access network (200), wherein the heterogeneous radio access network (200) comprises a serving base station and a target base station (206), the serving base station (204) providing the user equipment (202) with a bias (208) to a measurement of signal strengths of the target base station's signals received by the user equipment (202), the method comprising:
a. the user equipment (202) sending a report to the serving base station (204), the report comprising measured signal strength values resulting from the measurement of the biased target base station's signal strength (212) and the signal strength (214) of the serving base station's signals received at the user equipment (202),
b. the serving base station (204) deciding the user equipment's handover to the target base station (206) based on an evaluation of the report,
c. the serving base station (204) instructing the target base station (206) to instruct the user equipment (202) to change the bias (208) to be applied on the measurement of the signal strength (212) of the target base station's signals, wherein before applying the change to the bias (208) the biased target base station's signal strength (212) is smaller than after applying the change to the biased target base station's signal strength,
d. the serving base station (204) instructing the user equipment (202) to execute the handover to the target base station (206), whereupon a handover from the serving base station (204) to the target base station (206) is executed by the user equipment (202),
e. the target base station (206) becoming the serving base station (204) after the handover having been executed,
f. the serving base station (204) sending an instruction to the user equipment (202) instructing the user equipment (202) to change the bias (208) to be applied on the measurement of the serving base station's signals.

## Description

### Field of the Invention

The present invention relates to the field of heterogeneous radio access network, and more particularly to the field of avoiding ping-pong-handover effects in mobile communication networks at cell borders of interfacing cells of neighbouring base stations.

### Background art

In a heterogeneous radio access network the pico cells are deployed in areas with high user equipment density without often regarding interferences with signals delivered by adjacent macro basis stations. In case a pico cell is deployed near to a second macro cell unwanted ping pong handovers between both macro cells and the pico cell may occur.

Accordingly, there is a need in the art for countermeasures to be executed by the pico and macro basis stations to prevent unwanted ping pong handover effects.

### Summary of the invention

It is an objective of embodiments of the invention to provide for a method for controlling handovers of a user equipment in a heterogeneous radio access network, systems for controlling handovers of a user equipment in a heterogeneous radio access network and a computer program product.

Said objective is solved by the subject matter of the independent claims. Advantageous embodiments are described in the dependent claims.

In one aspect, the invention relates to a method for controlling handovers of a user equipment in a heterogeneous radio access network, wherein the heterogeneous radio access network comprises a serving base station and a target base station, the serving base station providing the user equipment with a bias to a measurement of signal strengths of the target base station's signals received by the user equipment, the method comprising:
a. the user equipment sending a report to the serving base station, the report comprising measured signal strength values resulting from the measurement of the biased target base station signal strength and the signal strength of the serving base station's signals received at the user equipment,
b. the serving base station deciding the user equipment's handover to the target base station based on an evaluation of the report,
c. the serving base station instructing the target base station to instruct the user equipment to change the bias to be applied on the measurement of the signal strength of the target base station's signals, wherein before applying the change to the bias the biased target base station's signal strength is smaller than after applying the change to the biased target base station's signal strength,
d. the serving base station instructing the user equipment to execute the handover to the target base station, whereupon a handover from the serving base station to the target base station is executed by the user equipment,
e. the target base station becoming the serving base station after the handover having been executed,
f. the serving base station sending an instruction to the user equipment instructing the user equipment to change the bias to be applied on the measurement of the serving base station's signals.

Said features may be advantageous, because the difference between the signal strengths of the serving base station and the signal strength of the target base station becomes bigger. Only one standard handover form the serving base station to the target base station will be performed by the user equipment. Because of the enlarged difference between the signal strength of the serving base station and the signal strength of the target base station, there will be no following unwanted ping pong handovers of the user equipment between the serving and the target base station's serving cell.

According to embodiments, the serving base station's instruction of the target base station (206) to instruct the user equipment to change the bias to be applied on the measurement of the target base station's signals is communicated from the serving base station to the target base station by means of a flag in a handover request of the serving base station.

Said embodiment may be advantageous, because for the serving base station's instruction to the target base station to instruct the user equipment to change the bias to be applied on the measurement of the target base station's signals, is no additional means of communications are necessary. Numbers of interactions between the serving base station and the target base station are not increased. Furthermore the usage of a flag could be implemented as a standard within handover request messages. For example the hitherto used standard of TS 36.423 defined in the frame of the 3^{rd}Generation Partnership Project (3GPP) could be extended by a corresponding flag field.

According to embodiments, the instruction comprises a time period, the time period defining a time span for applying the changed bias on the measurement of the target base station's signals.

Said embodiment may be advantageous, as a set flag for a certain time span enables a certain degree of independence between the user equipment's location and the actual relation between the strengths of the signals of the serving base station and of the target base station as long as the biased target base's station signal strength after applying the change to its bias is greater than the serving base station's signal strength.

According to embodiments, the target base station's signals comprise a pattern of Almost Blank Sub-Frames, wherein the serving base station is informed about the pattern of the Almost Blank Sub-Frames by the target base station, wherein after the execution of step b) the method comprises:
- the serving base station serving the user equipment exclusively at a time the target base station sends the Almost Blank Sub-Frames in case the difference of the signal strength of the target base station's signals and the signal strength of the serving base station signals according to the report falls below a threshold value,
- the serving base station (stopping serving the user equipment exclusively at the time the target base station sends the Almost Blank Sub-Frames in case the difference of the signal strength of the target base station's signals and the signal strength of the serving base station signals according to the report exceeds the threshold value.

Said features may be advantageous, because in dependence of the size of the difference between the signal strength of the target base station's signals and the signal strength of the serving base station signals, the serving base station can determine to synchronize or not to synchronize its serving of the user equipment with the target base station's time slot of sending Almost Blank Sub-Frames (ABS). In case the difference is big enough so that a ping-pong handover will certainly not occur, a synchronization of the serving base station's serving of the user equipment with the time slots of the target base station's ABS is not necessary so that the serving base station is free in determining its time of serving the user equipment. In case the difference between the signal strengths of the signals of the serving and the target base station is too small, a synchronisation of the serving base station's time of serving the user equipment prevents the user equipment to register the actual signal strength of the target base station so that a handover request to the target base station will not occur. The serving base station's determination to synchronize or not to synchronize its time of serving the user equipment with the target base station's ABS time slots in dependence of difference between the signal strength of the signals of the serving and the target base station, provides an effective countermeasure to avoid undesired ping-pong handovers by the user equipment.

According to embodiments, after the serving base station's decision for a handover of the user equipment to the target base station, based on an evaluation of the report, the serving base station delays in time sending the instruction to the user equipment to execute the handover to the target base station, wherein the delay is determined based on an evaluation of further reports of the user equipment after the serving base station's decision, wherein the further reports comprise the measured signal strength values resulting from the measurement of the biased target base station's signal strength and the signal strength of the serving base station's signals received at the user equipment.

Said features may be advantageous, because the serving base station which is able to evaluate the measurement values within the report and the further reports received from the user equipments, can calculate in each report the respective difference between the signal strengths of the signals of the target base station and the serving base station and based on these calculations can determine, if a respective difference is great enough to prevent undesired future ping-pong handovers between the serving and the target base station. The serving base station is able to delay the user equipment's execution of a handover until the serving base station foresees based on the evaluation of the reports that the handover to the target base station will not be reversed back to the serving base station again. Thus undesired ping-pong handovers are avoided in advance.

According to embodiments, the serving base station's instruction to the user equipment Instructs the user equipment to change the bias to be applied on the measurement of the target base station's signals to zero.

Setting the bias to zero permits extending spatially the cell domain of the target base station by simultaneously increasing the signal strength of the target base station. This may be advantageous because this may reduce available occasions for possibilities of handovers. The region in which the target base station's signal strength is larger than the serving base station's signal strength by a sufficiently large difference, in which ping pong handovers will not occur, will be spatially extended. So undesired ping-pong handovers will be avoided by increasing the region in which the target base station' signal strength is unambiguously greater than the serving base station's signal strength.

According to embodiments, the target base station is part of a heterogeneous radio access network further comprising a plurality of further target base stations, the serving base station further providing the user equipment with an individual bias to be applied on a measurement of individual signal strengths of individual signals received by the user equipment, the individual signals being transmitted by the further target base stations, the serving base station and the target base station, wherein the serving base station configures the user equipment to change the individual biases to the same value.

Said features may be advantageous, because the serving base station by setting a same absolute bias to all individual signal strengths of individual signals received by the user equipment can spatially symmetrically extend respectively scale down its region of service without changing the relations of the signal strengths of all other target base stations. By setting the bias so that the signal strength of the serving base station will be unambiguously greater than the signal strengths of all other target base stations, the serving base station may effect a handover of the user equipment to an intended base station without changing the relations of the signal strengths of all other target base stations. So the serving base station is able to surmount all other target base stations regarding its signal strength or to 'hide' itself under the signal strengths of all other target base stations by using only one bias value. By a focussed view on the serving base station, the serving base station is able to avoid in advance incidences of undesired ping pong handovers by means of one bias value.

In another aspect, the invention relates to a method for controlling handovers of a user equipment in a heterogeneous radio access network, the method being performed by a serving base station of the heterogeneous radio access network, wherein the heterogeneous radio access network further comprises a target base station, the serving base station providing the user equipment with a bias to a measurement of signal strengths of the target base station's signals received by the user equipment, the method comprising:
- receiving from the user equipment a report, the report comprising measured signal strength values resulting from the measurement of the biased target base station's signal strength and the signal strength of the serving base station's signals received at the user equipment,
- deciding a handover of the user equipment to the target base station based on an evaluation of the report,
- instructing the target base station to instruct the user equipment to change the bias to be applied on the measurement of the signal strength of the target base station's signals, wherein before applying the change to the bias the biased target base station's signal strength is smaller than after applying the change to the biased target base station's signal strength
- instructing the user equipment to execute the handover to the target base station, whereupon the handover from the serving base station to the target base station is executed by the user equipment.

In another aspect, the invention relates to a method for controlling handovers of a user equipment in a heterogeneous radio access network, the method being performed by a target base station of the heterogeneous radio access network, wherein the heterogeneous radio access network further comprises a serving base station, wherein the serving base station provides the user equipment with a bias to a measurement of signal strengths of the target base station's signals received by the user equipment, the method comprising:
- receiving from the serving base station an instruction to instruct the user equipment to change the bias to be applied on the measurement of the signal strength of the target base station's signals thus resulting in a biased target base station's signal strength,
- receiving a handover of a user equipment from the serving base station,
- sending an instruction to the user equipment instructing the user equipment to change the bias to be applied on the measurement of the target base station's signals,
wherein before applying the change to the bias the biased target base station's signal strength is smaller than after applying the change to the biased target base station's signal strength.

In another aspect, the invention relates to a method for controlling handovers of a user equipment in a heterogeneous radio access network, the method being performed by the user equipment, wherein the heterogeneous radio access network further comprises a target base station, wherein the user equipment is configured to execute a handover from the serving base station to the target base station upon a serving base station's handover command, wherein the user equipment is further configured to receive from the serving base station a bias to a measurement of signal strengths of the target base station's signals received by the user equipment, the method comprising:
- sending a report to the serving base station, the report comprising measured signal strength values resulting from the measurement of the biased target base station signal strengths and the signal strength of the serving base station's signals received at the user equipment,
- receiving a serving base station's command for a handover of the user equipment to the target base station based on an evaluation of the report,
- executing the handover from the serving base to the target base station, wherein after the handover having been executed the target base station is becoming the serving base station,
- after the handover having been executed, receiving from the serving base station an instruction to change the bias to be applied on the measurement of the serving base station's signals, and in response changing the bias in accordance with said instruction,
wherein before applying the change to the bias the blased target base station's signal strength is smaller than after applying the change to the biased target base station's signal strength.

In a further aspect, the invention relates to a computer-readable, non-transitory storage medium. The storage medium comprises computer-interpretable instructions that, when executed by the processor, cause the processor to perform the steps according to anyone of the embodiments of the computer implemented method described above.

In a further aspect, the invention relates to a heterogeneous radio access network, wherein the heterogeneous radio access network comprises a serving base station and a target base station, the serving base station providing the user equipment with a bias to a measurement of signal strengths of the target base station's signals received by the user equipment, wherein:
- the user equipment is adapted to send a report to the serving base station, the report comprising measured signal strength values resulting from the measurement of the biased target base station's signal strength and the signal strength of the serving base station's signals received at the user equipment,
- the serving base station is adapted to decide a user equipment's handover to the target base station based on an evaluation of the report,
- the serving base station is adapted to instruct the target base station to instruct the user equipment to change the bias to be applied on the measurement of the signal strength of the target base station's signals, wherein before applying the change to the bias the biased target base station's signal strength is smaller than after applying the change to the biased target base station's signal strength,
- the serving base station is adapted to instruct the user equipment to execute the handover to the target base station, whereupon the user equipment is adapted to execute the handover from the serving base station to the target base station,
- the target base station is adapted to become the serving base station after the handover having been executed,
- the serving base station is adapted to instruct the user equipment to change the bias to be applied on the measurement of the serving base station's signals.

in a further aspect, the invention relates to a serving base station that is part of a heterogeneous radio access network, wherein the heterogeneous radio access network further comprises a target base station, wherein the serving base station is configured to control the handovers of a user equipment to the target base station, the serving base station being adapted to provide the user equipment with a bias to a measurement of signal strengths of the target base station's signals received by the user equipment, wherein the serving base station is adapted to perform the following steps:
- receiving a report sent by the user equipment, the report comprising measured signal strength values resulting from the measurement of the biased target base station's signal strength and the signal strength of the serving base station's signals received at the user equipment,
- deciding the user equipment's handover to the target base station based on an evaluation of the report,
- instructing the target base station to instruct the user equipment to change the bias to be applied on the measurement of the signal strength of the target base station's signals, wherein before applying the change to the bias the biased target base station's signal strength is smaller than after applying the change to the biased target base station's signal strength,
- instructing the user equipment to handover to the target base station, whereupon a handover from the serving base station to the target base station is executed by the user equipment.

In a further aspect, the invention relates to a target base station that is part of a heterogeneous radio access network, wherein the heterogeneous radio access network further comprises a serving base station, the serving base station providing the user equipment with a bias to a measurement of signal strengths of the target base station's signals received by the user equipment, wherein the target base station is adapted to perform the following steps:
- receiving from the serving base station an instruction to instruct the user equipment to change the bias to be applied on the measurement of the signal strength of the target base station's signals thus producing a biased target base station's signal strength,
- receiving a handover of the user equipment from the serving base station,
- sending the bias to the user equipment,
- sending an instruction to the user equipment instructing the user equipment to change the bias to be applied on the measurement of the target base station's signals,
wherein before applying the change to the bias the biased target base station's signal strength is smaller than after applying the change to the biased target base station's signal strength.

In a further aspect, the invention relates to a user equipment being servable by a serving base station of a heterogeneous radio access network, wherein the heterogeneous radio access network further comprises a target base station, wherein the user equipment is configured to execute a handover from the serving base station to the target base station upon a serving base station's handover command, wherein the user equipment is further configured to receive from the serving base station a bias to a measurement of signal strengths of signals received by the user equipment, the signals being transmitted by the serving base station and the target base station, wherein the user equipment is adapted to perform the following steps:
- sending a report to the serving base station, the report comprising measured signal strength values resulting from the measurement of the biased target base station signal strength and the signal strength of the serving base station's signals received at the user equipment,
- receiving a serving base station's decision for a handover of the user equipment to the target base station based on an evaluation of the report,
- executing the handover from the serving base station to the target base station, wherein after the handover having been executed the target base station is becoming the serving base station,
- receiving from the serving base station an instruction to change the bias to be applied on the measurement of the serving base station's signals, and in response changing the bias in accordance with said instruction,
wherein before applying the change to the bias the biased target base station's signal strength is smaller than after applying the change to the biased target base station's signal strength.

### Brief description of the drawings

The above and other items, features and advantages of the invention will be better understood by reading the following more particular description of embodiments of the invention in conjunction with the figures wherein:
- FIG. 1a: is a flowchart of a method for controlling handovers of a user equipment in a heterogeneous radio access network
- FIG. 2: depicts a user equipment in the overlapping zone of a serving base station and a target base station,
- FIG. 3- FIG. 8: depict different extensions of the concept shown in Fig. 2.

### Detalled description of the invention

Embodiments of the invention are described herein after by way of examples with reference to the accompanying figures and drawings.

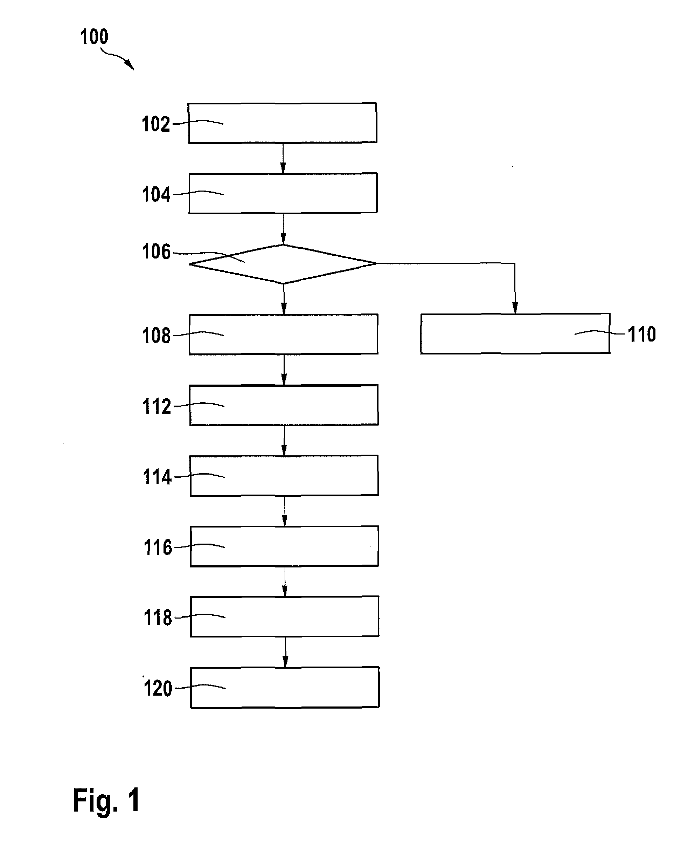

Fig. 1 is a flowchart 100 of a method for controlling handovers of a user equipment in a heterogeneous radio access network. In step 102 the serving base station provides the user equipment with a bias to a measurement of signal strengths of the target base station's signals received by the user equipment. In step 104 the user equipment sends a report to the serving base station. The report comprises measured signal strength values resulting from the measurement of the biased target base station signal strength and the signal strength of the serving base station's signals received at the user equipment. In step 106, the serving base station decides the user equipment's handover to the target base station based on an evaluation of the report. In case of a positive decision in step 108, the serving base station in step 112 instructs the target base station to instruct the user equipment to change the bias to be applied on the measurement of the signal strength of the target base station's signals. Thereby before applying the change to the bias the biased target base station's signal strength is smaller than after applying the change to the biased target base station's signal strength. In step 114 the serving base station instructs the user equipment to execute the handover to the target base station. The user equipment in step 116 executes a handover from the serving base station to the target base station. After the handover has been executed, the target base station in step 118 becomes the serving base station. In step 120 the serving base station sends an instruction to the user equipment instructing the user equipment to change the bias to be applied on the measurement of the serving base station's signals. In case of a serving base station's negative decision concerning the user equipment's handover in step 110, the method will be aborted.

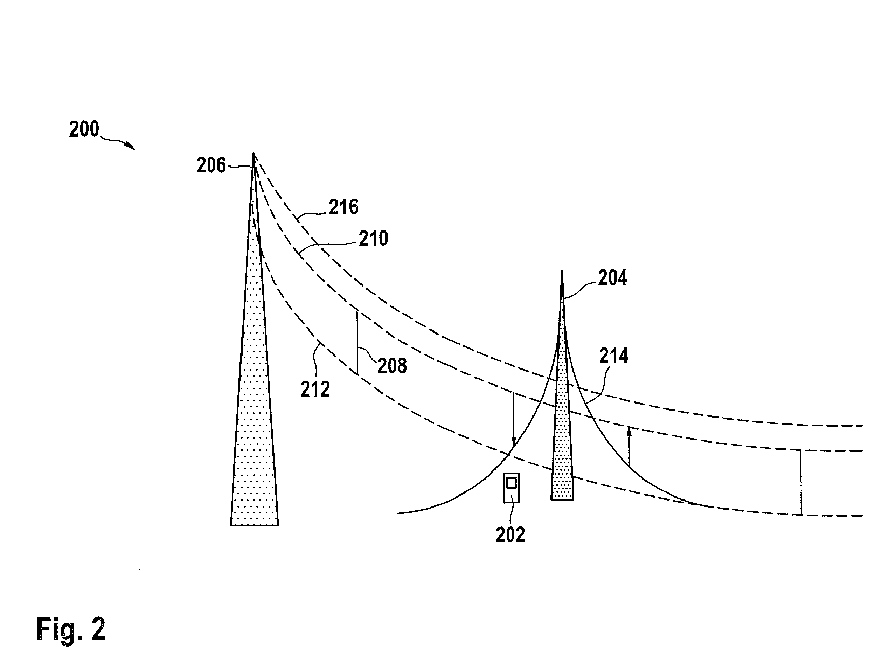

Fig. 2 depicts a serving base station 204 transmitting signals of signal strength 214. Adjacent to the serving base station 204 there is deployed a target base station 206 transmitting signals of signal strength 210. A user equipment 202 is actually served by the serving base station 204. The serving base station 204 for purposes of load balancing configures the user equipment 202 to apply in its measurements of the signals received by the user equipment 202 a bias 208 to the actual unbiased signal strength 216 of the target base station's signals. The cells of the serving base station 204 and the of the target base station 206 overlap. In the overlapping region there are locations where the signal strength 214 of the serving base station 204 and the biased signal strength 212 of the target base station 206 are nearly identical or fluctuate about an identical value. At those locations the probability of incidences for undesired handovers of a user equipment located at such a location is high. Because of fluctuations concerning the signal strengths 212, 214 of the serving 204 and target base station 206, a user equipment 202 located at such a location will always execute a handover to the base station delivering the respective stronger signal. In case of a high frequency of handover incidences those handovers are disturbing the service quality of wireless communication. These are referred to as ping-pong handovers.

According to the method 100 for controlling handovers of a user equipment in a heterogeneous radio access network as described in Fig. 1, the serving base station 204 Instructs the target base station 206 to change the bias 208 to be applied on the measurement of the signal strength 212 of the target base station's signals, wherein before applying the change to the bias 208 the biased target base station's signal strength 212 is smaller than after applying the change to the biased target base station's signal strength 210. In case a bias is subtracted from the unbiased signal strength 216 of the target base station's signals, the bias is reduced. The change of the bias 208 so that the signal strength 210 after application of the bias 208 is higher than before the application of the change effects that after a handover of the user equipment 202 the difference between the signal strengths 210 and 214 of the two base stations is so high that a handover request will not be initiated. In this way undesired handovers are avoided.

The serving base's instruction of the target base station 206 to instruct the user equipment 202 to change the bias 208 to be applied on the measurement of the target base station's signals can also comprise a time period for defining a time span for applying the changed bias on the measurement of the target base station's signals. Thus the validity of the change of the bias 208 of the signal strength 210 of the target base station becoming after the user equipment handover the serving base station can be determined by the previous serving base station. In case the resources of the serving base station 204 are overloaded, the serving base station has a means of directing a user equipment 202 to an adjacent target base station 206 for a time span adapted to its own capacity, simultaneously avoiding ping-pong handovers depicting unneeded administration.

The value of the bias 208 can be communicated from the serving base station 204 to the target base station 206 as Integrated in the serving base station's handover request for the user equipment 202 or by a message. In the case the value of the bias 208 is zero a transfer of information about this could be realized for example by a flag within the handover request message from the serving base station 204 to the target base station 206. A bias can be applied either selectively to a signal strength of the signals of one target base stations or to a plurality of signal strengths of a plurality of target base stations. Thereby the value of the bias can be identical or not identical. The bias can be any value for manipulating the measurement value of any measured signal strength. The serving base station 206 can determine the value of the bias regarding all signal strengths received by the user equipment. Determination of the bias value should be aimed at creating one measurement value of a received signal which exceeds clearly and unambiguously other measurement values by a great enough difference to avoid indefinite and unstable serving states characterized by a high frequency of unwanted ping-pong handovers.

In case the target base station 206 transmits Almost Blank Sub-frames (ABS) in a time certain pattern, of which the serving base station 204 is informed by the target base station 206 via a X2 communication interface, the serving base station 204 can use that ABS pattern to avoid ping-pong handovers in case the difference between the signal strengths 212 and 214 of the serving base station 204 and of the target base station 206 is small. By serving the user equipment 202 exclusively at times when the target base station 206 transmits ABS, the user equipment 202 does only register the signal strength 214 of the serving base station 204, but not the signal strength 212 of the target base station 206. Consequently their will be no incidences of undesired ping-pong handovers at locations where the signal strength 212 of the target base station 206 is similar to the signal strength 214 of the serving base station 204.

The serving base station 204 decides a handover of the user equipment 202 to the target base station 206 on the basis on an evaluation of measurement reports delivered by the user equipment 202. In these reports the serving base station 206 is provided with measurement values of all signals the user equipment is able to receive. The serving base station compares those measurement values and decides for or against a handover of the user equipment 202 to a target base station 206. In case the serving base station's decision for a user equipment's handover to a target base station 206 is positive (step 108 in Fig.1), the serving base station 204 has also the ability to delay an initiation of the user equipment's handover to the target base station 206. Thereby the serving base station 206 determines the time span of the delay on basis of a steady evaluation of the measurement values provided by the regularly received reports delivered by the user equipment 202. In case the evaluation of the measurement values indicates that there are clear and great enough differences in the signal strengths of the signals received by the user equipment 202, the serving base station 204 can cause the user equipment 202 to execute the handover to the target base station 206.

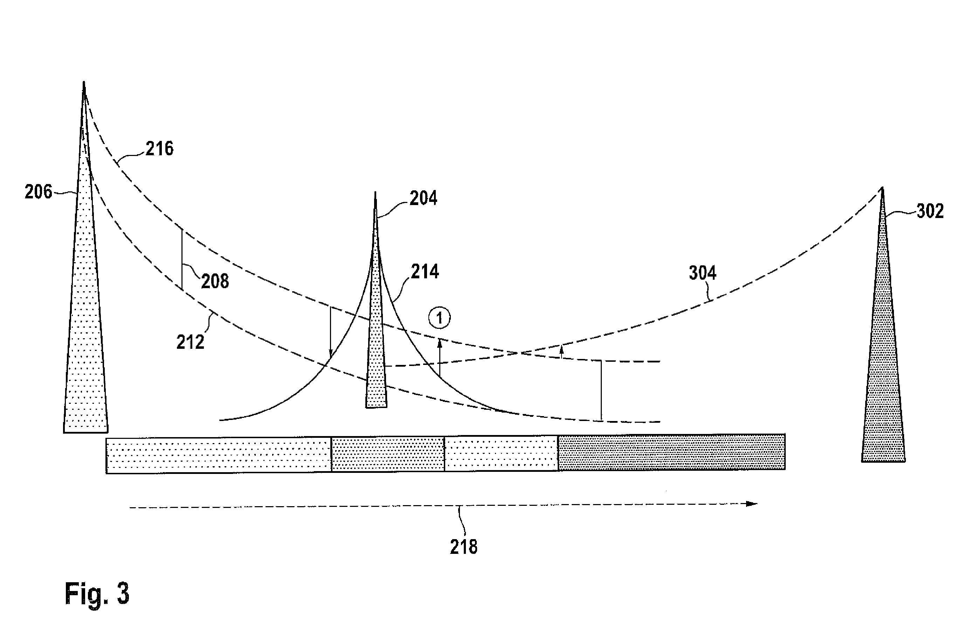

Fig. 3 depicts an extension of the concept shown in Fig. 2 by second target base station 302.
Regarding a plurality of target base stations the above described method steps have to be applied by pairs and in relation to each other's signal strengths. Related to a heterogeneous radio access network of the 3^{rd}Generation Partnership Project, the serving base station 214 may be a pico base station and the target base station 206 may be a macro base station. In this context the unbiased signal strength of signals of a base station corresponds to its RSRP value, wherein RSRP Is the abbreviation of "Reference Signal Received Power".

The two target base stations 206, 302 may be macro base stations. A user equipment 202 actually being served by the serving base station 204, which may be a pico base station, is configured by the serving base station 204 to apply a blas 208 on the measurement value of the signal strength of the signals of the first target base station 206, but not on the measurement value of the signal strength of the signals of the second target base station 302. The first target base station 206 sends ABS frames. The second target base station 302 does not send ABS frames. The serving base station 204 is informed about which target base station sends ABS frames and which does not. That implies that the serving base station 204, has no possibility to prevent interference of signals being transmitted from the second target base station 302 when a user equipment 202 being served by the serving base station 204 is moving 218 towards the direction of the second target base station 302. At position 1 the unbiased signal strength 304 of the second target base station 302 is greater than the signal strength 214 of the serving base station's signals which is greater than the biased signal strength 212 of the first target base station 206's signals. The user equipment 202 would execute a handover to the second target base station 302.

Within an A3 event the RSRP values of the first target base station 206 and also of all other detectable signal strengths of signals received by the user equipment 202, are reported by the user equipment 202 to the serving base station 204. Based on the A3 event, the serving base station 204 detects that the unbiased signal strength 216 of the signals of the first target base station 206 is higher than the unbiased signal strength of the signals of the second target base station 302 and identifies the possible incidence of a ping-pong handover. To avoid ping-pong handovers the serving base station 204 may take the following countermeasure:

The serving base station 204 sends a handover command to the user equipment 202 to execute a handover to the first target base station 206, thus blocking a user equipment's handover to the second base station 302.

Here the serving base station 204 does not follow the user equipment's request for a handover towards the second base station 302. Instead the serving base station 204 transmits a handover request to the first target base station 206. Within this handover request transmitted by the serving base station 204 to the first target base station 206 via the X2 interface an additional information may indicate that for this specific user equipment no bias should be applied to the signal strength of the signals of the first target base station 206 to avoid a ping pong handover from the first target base station 206 to the serving base station 204. The additional information may be a flag within the serving base station's handover request message, for example such as defined by TS 36.423 in the 3GPP, or any other extra message.

If the user equipment 202 is moved 218 towards the second target base station 302 a standard handover (macro base station to macro base station) will be executed. The second target base station 302 becomes the actual serving base station.

In case the user equipment 202 is moved back to its previous serving base station 204, the user equipment 202 should be served by its previous serving base station 204, which is now a target base station. The user equipment's handover from the actual serving base station 206 towards its previous serving base station 204 will occur as a standard handover (e.g. when the signal strength of signals of the previous serving base station 204 is higher than the unbiased signal strength of signals of the actual serving base station 206).

A time span can be pre-defined for how long the user equipment 202 shall apply the change to the bias 208. This may be for example useful for cases in which the user equipment's movement 218 towards the second target base station 302 is stopped. For example, when the user of the user equipment 202 remains for a longer time at a location between a region where a handover to the first target base station 206 would occur and a region where a handover to the second base station 302 would occur, and when afterwards the user equipment 202 is moved back to the previous serving base station 204, a handover to the previous serving base station will be prevented.

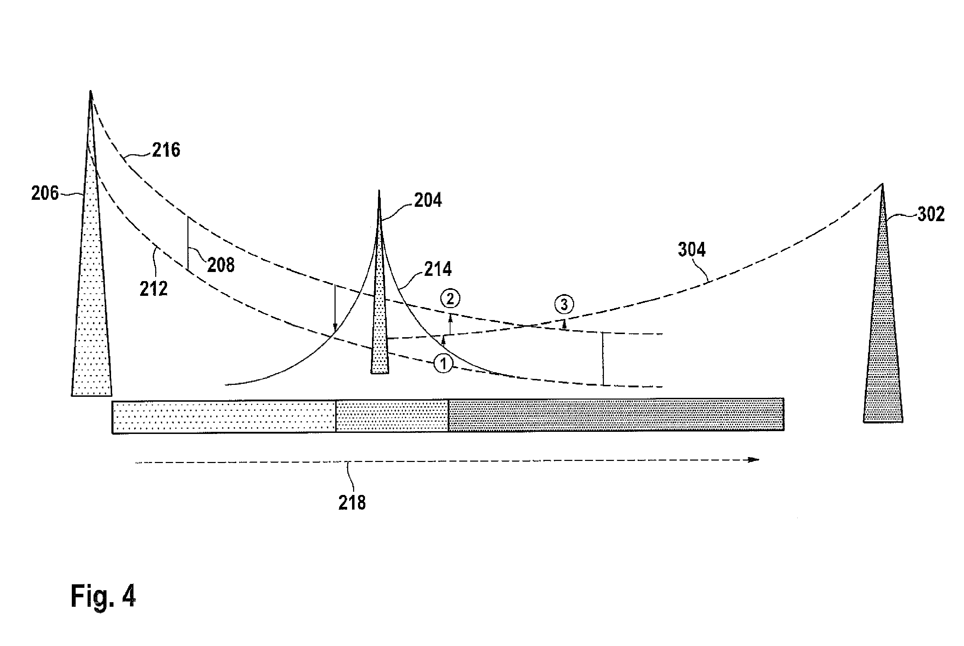

Fig. 4 depicts an extension of the concept shown in fig. 2 in which the serving base station 204 takes another countermeasure to avoid ping-pong handovers. The serving base station 204 allows a user equipment's handover to the second base station 302, simultaneously blocking a handover to first target base station 206.

The serving base station 204 initiates the user equipment's handover to the second base station 302 at position 1, if the unbiased signal strength of signals of the second target base station 302 is greater than the signal strength of the actual serving base station 204. With the unbiased signal strength corresponding for example to the Reference signal Received Power, RSRP, the handover condition at position 1 can be described as RSRP_M2 > RSRP_P + 2dB, wherein RSRP_M2 corresponds to the unbiased signal strength of signals of the second target base station 302, RSRP_P corresponds to the unbiased signal strength of signals of the actual serving base station, where 2dB is a typical a3-Offset of a base station and wherein RSRP is defined as described at the beginning of the description of Fig. 3.

The second base station 302 now exploits that the first target base station 206 sends ABS frames. The second base station 302 configures the user equipment 202 to restrict measurements and exclusively serves the user equipment 202 at times the first target base station 206 transmits ABS frames. After the handover at position 1 the user equipment 202 sends an A3 event at position 2 if RSRP_M1 > RSRP_M2 + 2dB, wherein RSRP _M1 corresponds to the unbiased signal strength of signals of the first target base station.

The second base station 302 now blocks the user equipment's handover to first target base station 206 although RSRP_M1 > RSRP_M2 +2 dB. So in principle, the second base station 302 performs a range extension towards the first target base station 206. The user equipment 202 is configured to periodically report RSRPs. The user equipment 202 is only served by the actual serving base station at times the first target base station 206 transmits ABS frames until position 3 is reached, where RSRP_M2> RSRP_M1 + 2dB.

When moved 218 beyond position 3 towards the actual serving base station 302, RRM measurements and serving of the user equipment are no longer restricted to times at which the first target base station 206 send ABS.

To realize this approach the base station 302 acting as the actual serving base station requires the information that it has to serve the user equipment 202 only at times the first target base station 206 sends ABS frames. This information can be provided for example by:
- a fixed configuration.
- a derivation from history (information about previous incidents of ping pong handovers)
- signaling by the previous serving base station to the target base station that after a handover to the target base station has been executed and the target base station has become the new serving base station, the latter one has to serve the user equipment only at times another target base station sends ABS frames, e.g. by a flag in the corresponding handover request, which may be standardized, or by a proprietary message especially designed for this type of information.

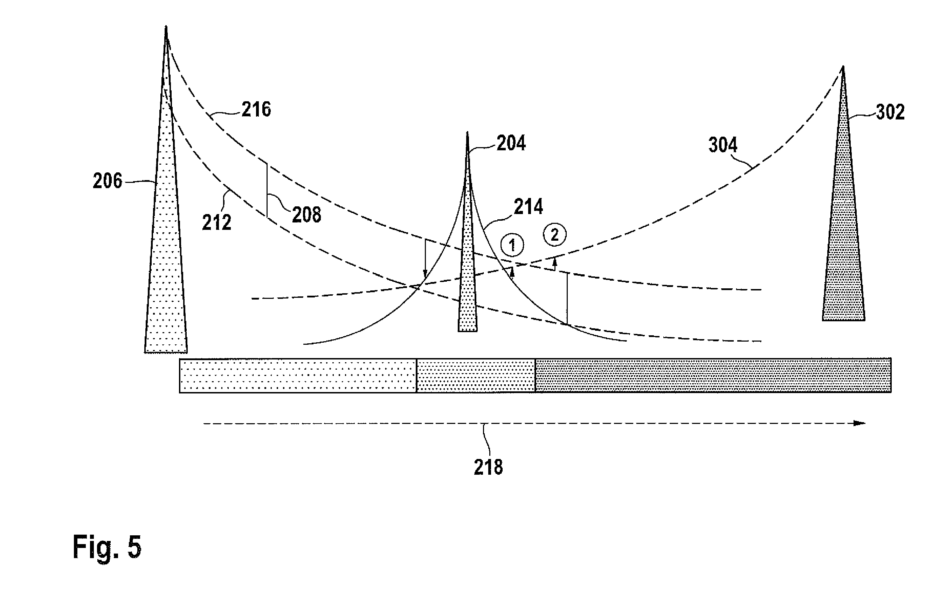

Fig. 5 depicts an extension of the concept shown in fig. 2, where the first target base station 206 and the first target base station 302 send ABS frames. It is assumed that there is an overlap of the ABS patterns of the first target base station 206 and the first target base station 302. A user equipment is configured to apply a bias only on the measured signal strength of the first target base station 206, but not on the measured signal strength of the second target base station 302.

In case the second base station 302 sends ABS frames but does not apply a bias to the serving base station's signal strengths, a user equipment 202 will be served by the serving base station 204 at times the second target base station sends ABS frames. The user equipment 202 will trigger an A3 event requesting a handover from the serving base station 204 to the second target base station 302 at position 1, based on the comparison of RSRP_M2 > RSRP_P + 2dB, wherein RSRP_M2 is the unbiased signal strength of the signals of the second target base station 302 and RSRP_P is the signal strength of the serving base station 204.

As the the serving base station 204 is informed about the ABS pattern of the second base station 302, it may delay the user equipment's handover from the serving base station 204 towards the second target base station 302 and will analyse RSRP reports provided by the user equipment 202. This requires that the user equipment 202 is configured to send RSRP reports within defined intervals after the A3 event was transmitted to the serving base station 204. The periodical reporting is supported by the TS 36.331.

Because of the assumed overlap of ABS pattern transmitted from the first target base station 206 and the second target base station 302, the user equipment 202 will be served on a common subset of ABS frames from the first target base station 206 and the second target base station 302 until at position 2 because of RSRP_ M2 > RSRP_M1 + 2dB a standard handover to the second target base station 302 is executed. At this position the serving base station 204 decides that a user equipment's handover to the second base station 302 shall be carried out, wherein this decision is not based on a user equipment's A3 event, but on the periodical reporting by the user equipment 202.

The serving base station 204 will request from the second target base station 302 via the X2 interface a provision of resources for a handover. If the second target base station 302 accepts the handover, the serving base station 204 will transmit to the user equipment a handover command towards the second target base station 302.

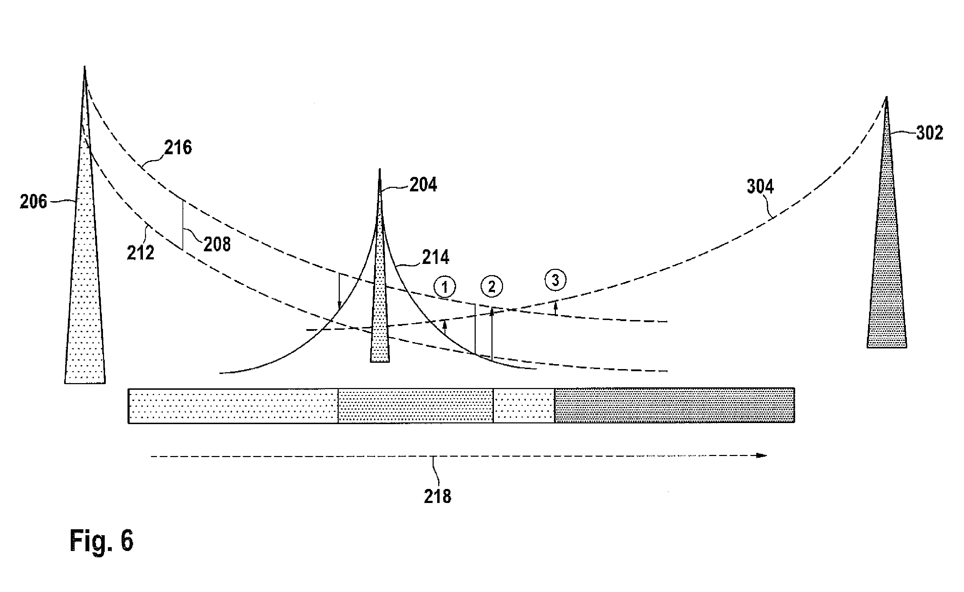

Fig. 6 depicts a scenario under the same conditions as in Fig. 5, namely the target base stations 206 and 302 are sending ABS frames and the user equipment 202 is configured to apply a bias 208 on the signal strength of the signals of the first target base station 206. At position 2 in Fig. 6 there might be a A3 event caused by the user equipment 202 requesting a handover from the serving base station 204 to the first target base station 206 based on the comparison of signal strengths at position 2, where the biased signal strength of signals of the first target base station are greater than the signal strength of the signals of the serving base station: RSRP_M1 bias > RSRP_P + 2dB.

The serving base station 204 exploits the transmission of ABS frames from the second target base station 302 and exclusively serves the user equipment 202 at times the second target base station 302 sends the ABS frames so that the user equipment will not register signals of the second target base station 302 when it is served by the serving base station 204. Thus at position 2 instead of requesting a handover to the second target base station 302, the user equipment 202 will receive a handover command from the serving base station 204 to carry out a handover to the first target base station 206 instead of to the second target base station 302. Thus the serving base station 204 by exploiting the ABS pattern of the second target base station 302 is able to delay the user equipment's handover to the second target base station 302. So at position 2 the first target base station 206 will become the new serving base station, and not the second target base station 302. After having been moved towards the second target base station 302 at position 3, the user equipment 202 will execute a standard handover from the actual serving base station 206 to the second target base station 302.

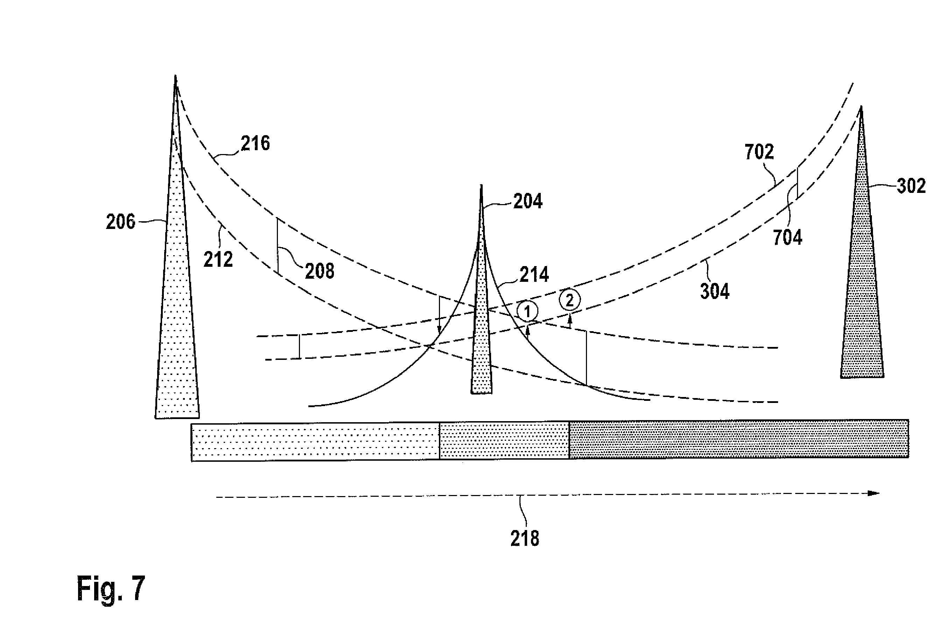

Fig. 7 depicts an extension of the concept shown in Fig. 2, wherein the second target base station 302 sends ABS and applies a blas to the signals of the serving base station 204.

In this case the second base station 302 sends ABS frames and a bias value to the serving base station 204,

At position 1 the user equipment 202 triggers an A3 event requesting a handover to the second target base station 302, based on the evaluation of the comparison of signal strengths of the serving base station 204 and the second target base station: RSRP_M2 - blasM2 > RSRP_P + 2dB, wherein RSRP_M2 corresponds to the unbiased signal strength 702 of the second target base station 302, biasM2 corresponds to the bias 704 which has to be applied by the user equipment when measuring the signal strength of signals of the second base station 302 and wherein RSRP_P corresponds to the signal strength of signals of the serving base station 204.

The handover will be delayed by the the serving base station 204, keeping the user equipment 202 being served by the serving base station 204. The user equipment has to report on a periodical basis RSRP values to the serving base station 204 while it Is served by the serving base station 204 exclusively at times of ABS frames transmitted from the first target base station 206 and the second base station 302.

At position 2, where the unbiased signal strength of the second target base station 302 is greater than the unblased signal strength of the first target base station, RSRP_M2 > RSRP_M1 + 2dB, the user equipment will execute a standard handover to the second target base station 302. Thereby the decision of the serving base station 204 to give the command to the user equipment to execute a handover to the second target base station 302 is not based on the user equipment's A3 event, but on the evaluation of the reports sent from the user equipment 202 periodically to the serving base station 204.

Therefore, the serving base station 204 will request from the second base station 302 via the X2 interface a provision and preparation of resources of the second target base station 302 for the user equipment's handover to the second target base station 302. If the second target base station 302 accepts the handover the serving base station 204 will send to the user equipment 202 a handover command towards the second target base station 302.

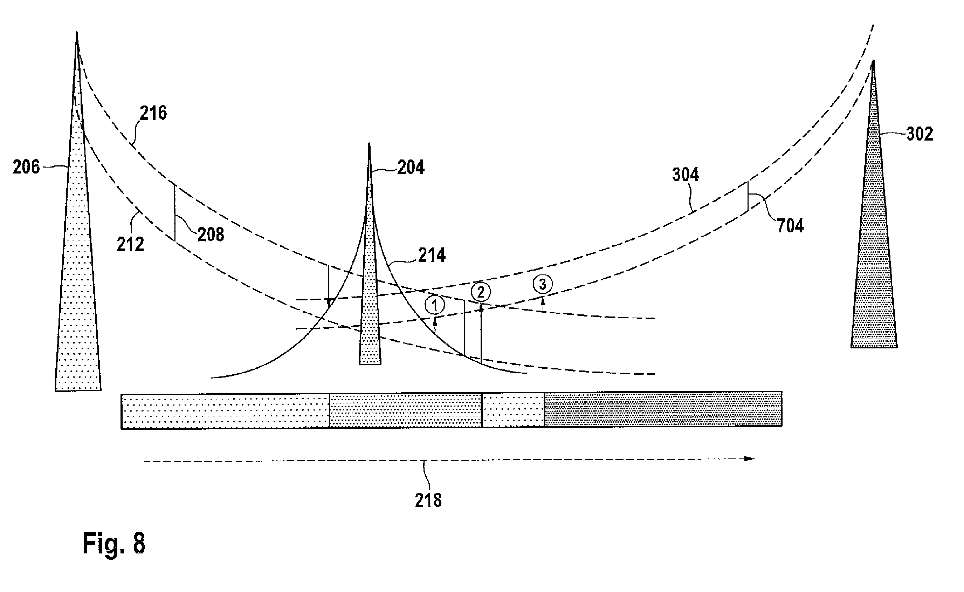

Fig. 8 depicts another scenario under the same condition as described in Fig. 7. In this scenario there might be a A3 event from the user equipment 202 requesting a handover from the serving base station 204 to the first target base station 206 based on that fact that the biased signal strength 212 of the first target base station 206 is greater than the signal strength 214 of the signals of the serving base station 204: RSRP_M1 - bias > RSRP_P + 2dB.

The serving base station 204 delays a handover of the user equipment 202 to the second target base station 302 by serving the user equipment 202 only at times the second target base station sends ABS frames, so that the signal strength of signals of the second target base station will not be registered by the user equipment at position 2. Consequently at position 2 the user equipment 202 will receive a handover command from the serving base station 204 to carry out a handover to the first target base station 206 instead to the second target base station 302. When the user equipment 202 is moved towards the second target base station 302, at position 3 the user equipment 202 will execute a standard handover from the actual serving base station 206 to the second target base station 302.

### Reference List

| | |
|---|---|
| 200 | heterogeneous radio access network |
| 202 | user equipment |
| 204 | serving base station |
| 206 | target base station |
| 208 | bias |
| 210 | biased signal strength of target base station after applying the change to the bias |
| 212 | biased signal strength of target base station's signals |
| 214 | signal strength of the serving base station's signals |
| 216 | unbiased signal strength of the first target base station's signals |
| 218 | movement of the user equipment |
| 302 | second target base station |
| 304 | unbiased signal strength of second target base station's signals |
| 702 | unbiased signal strength of the second target base station's signals |
| 704 | bias |

## Claims

1. A method for controlling handovers of a user equipment (202) in a heterogeneous radio access network (200), wherein the heterogeneous radio access network (200) comprises a serving base station (204) and a target base station (206), the serving base station (204) providing the user equipment (202) with a bias (208) to a measurement of signal strengths of the target base station's signals received by the user equipment (202), the method comprising:
a. the user equipment (202) sending a report to the serving base station (204), the report comprising measured signal strength values resulting from the measurement of the biased target base station's signal strength (212) and the signal strength (214) of the serving base station's signals received at the user equipment (202),
b. the serving base station (204) deciding the user equipment's handover to the target base station (206) based on an evaluation of the report,
c. the serving base station (204) instructing the target base station (206) to instruct the user equipment (202) to change the bias (208) to be applied on the measurement of the signal strength of the target base station's signals, wherein before applying the change to the bias (208) the biased target base station's signal strength (212) is smaller than after applying the change to the biased target base station's signal strength (216),
d. the serving base station (204) instructing the user equipment (202) to execute the handover to the target base station (206), whereupon a handover from the serving base station (204) to the target base station (206) is executed by the user equipment (202),
e. the target base station (206) becoming the serving base station (204) after the handover having been executed,
f. the serving base station (204) sending an instruction to the user equipment (202) instructing the user equipment (202) to change the bias (208) to be applied on the measurement of the serving base station's signals.

2. The method according to claim 1, wherein the serving base station's instruction of the target base station (206) to instruct the user equipment (202) to change the bias (208) to be applied on the measurement of the target base station's signals is communicated from the serving base station (204) to the target base station (206) by means of a flag in a handover request of the serving base station (204).

3. The method according to any of the previous claims 1 to 2, wherein the instruction comprises a time period, the time period defining a time span for applying the changed bias on the measurement of the target base station's signals (212).

4. The method according to claim 2, wherein the target base station's signals (212, 216) comprise a pattern of Almost Blank Sub-Frames, wherein the serving base station (204) is informed about the pattern of the Almost Blank Sub-Frames by the target base station (206), wherein after the execution of step b) the method comprises:
- the serving base station (204) serving the user equipment (202) exclusively at a time the target base station (204) sends the Almost Blank Sub-Frames in case the difference of the signal strength of the target base station's signals (212) and the signal strength (214) of the serving base station (204) signals according to the report falls below a threshold value,
- the serving base station (204) stopping serving the user equipment (202) exclusively at the time the target base station (206) sends the Almost Blank Sub-Frames in case the difference of the signal strength (212) of the target base station's (206) signals and the signal strength (214) of the serving base station (204) signals according to the report exceeds the threshold value.

5. The method of claim 1, wherein after the serving base station's decision for a handover of the user equipment (202) to the target base station (206), based on an evaluation of the report, the serving base station (204) delays in time sending the instruction to the user equipment (202) to execute the handover to the target base station (206), wherein the delay is determined based on an evaluation of further reports of the user equipment (202) after the serving base station's decision, wherein the further reports comprise the measured signal strength values resulting from the measurement of the biased target base station's signal strength (212)and the signal strength (214) of the serving base station's signals received at the user equipment (202).

6. The method according to any of the previous claims 1 to 3, wherein the serving base station's (204) instruction to the user equipment (202) instructs the user equipment (202) to change the bias (208, 704) to be applied on the measurement of the target base station's signals (216) to zero.

7. The method according to any of the previous claims 1 or 4, wherein the target base station (206) is part of a heterogeneous radio access network (200) further comprising a plurality of further target base stations (302), the serving base station (204) further providing the user equipment (202) with an individual bias (704) to be applied on a measurement of individual signal strengths of individual signals (304) received by the user equipment (202), the individual signals being transmitted by the further target base stations (302), the serving base station (204) and the target base station (206, 302), wherein the serving base station (204) configures the user equipment (202) to change the individual biases (208, 704) to the same value.

8. A method for controlling handovers of a user equipment (202) in a heterogeneous radio access network (200), the method being performed by a serving base station (204) of the heterogeneous radio access network (200), wherein the heterogeneous radio access network (200) further comprises a target base station (206), the serving base station (204) providing the user equipment (202) with a bias (208) to a measurement of signal strengths (212) of the target base station's signals received by the user equipment (202), the method comprising:
- receiving from the user equipment (202) a report, the report comprising measured signal strength values (212) resulting from the measurement of the biased target base station's signal strength (212) and the signal strength (214) of the serving base station's signals received at the user equipment (202),
- deciding a handover of the user equipment (202) to the target base station (206) based on an evaluation of the report,
- instructing the target base station (206) to instruct the user equipment (202) to change the bias (208) to be applied on the measurement of the signal strength (216, 212) of the target base station's signals, wherein before applying the change to the bias (208) the blased target base station's signal strength (212) is smaller than after applying the change to the biased target base station's signal strength (216),
- instructing the user equipment (202) to execute the handover to the, whereupon the handover from the serving base station (204) to the target base station (206) is executed by the user equipment (202).

9. A method for controlling handovers of a user equipment (202) in a heterogeneous radio access network (200), the method being performed by a target base station (206) of the heterogeneous radio access network (200), wherein the heterogeneous radio access network (200) further comprises a serving base station (204), wherein the serving base station (204) provides the user equipment (202) with a bias (208) to a measurement of signal strengths of the target base station's signals received by the user equipment (202), the method comprising:
- receiving from the serving base station (204) an instruction to instruct the user equipment (202) to change the bias (202) to be applied on the measurement of the signal strength (216,212) of the target base station's signals thus resulting in a biased target base station's signal strength,
- receiving a handover of a user equipment (202) from the serving base station (204),
- sending an instruction to the user equipment (202) instructing the user equipment (202) to change the bias (208) to be applied on the measurement of the target base station's signals,
wherein before applying the change to the bias (208) the biased target base station's signal strength (212) is smaller than after applying the change to the biased target base station's signal strength.

10. A method for controlling handovers of a user equipment (202) in a heterogeneous radio access network (200), the method being performed by the user equipment (202), wherein the heterogeneous radio access network (200) further comprises a target base station (206), wherein the user equipment (202) is configured to execute a handover from the serving base station (204) to the target base station (206) upon a serving base station's handover command, wherein the user equipment (202) is further configured to receive from the serving base station (204) a bias (208) to a measurement of signal strengths of the target base station's signals received by the user equipment (202), the method comprising:
- sending a report to the serving base station (204), the report comprising measured signal strength values resulting from the measurement of the biased target base station (206) signal strengths and the signal strength of the serving base station's signals received at the user equipment (202),
- receiving a serving base station's command for a handover of the user equipment (202) to the target base station (206) based on an evaluation of the report,
- executing the handover from the serving base station (204) to the target base station (206), wherein after the handover having been executed the target base station (206) is becoming the serving base station (204),
- after the handover having been executed, receiving from the serving base station (204) an instruction to change the bias (208) to be applied on the measurement of the serving base station's signals, and in response changing the bias (208) in accordance with said instruction,
wherein before applying the change to the bias (208) the biased target base station's signal strength (212) is smaller than after applying the change to the biased target base station's signal strength.

11. A computer program product comprising computer executable instructions to perform the method steps as claimed in any of the previous method claims.

12. A heterogeneous radio access network (200), wherein the heterogeneous radio access network (200) comprises a serving base station (204) and a target base station (206), the serving base station (204) providing the user equipment (202) with a bias (208) to a measurement of signal strengths (212) of the target base station's signals received by the user equipment (202), wherein:
- the user equipment (202) is adapted to send a report to the serving base station (204), the report comprising measured signal strength values resulting from the measurement of the biased target base station's signal strength and the signal strength of the serving base station's signals received at the user equipment (202),
- the serving base station (204) is adapted to decide a user equipment's handover to the target base station (206) based on an evaluation of the report,
- the serving base station (204) is adapted to instruct the target base station (206) to instruct the user equipment (202) to change the bias (208) to be applied on the measurement of the signal strength of the target base station's signals, wherein before applying the change to the bias (208) the biased target base station's signal strength (212) is smaller than after applying the change to the biased target base station's signal strength,
- the serving base station (204) is adapted to instruct the user equipment (202) to execute the handover to the target base station (206), whereupon the user equipment (202) is adapted to execute the handover from the serving base station (204) to the target base station (206),
- the target base station (206) is adapted to become the serving base station (204) after the handover having been executed,
- the serving base station (204) is adapted to instruct the user equipment (202) to change the bias (208) to be applied on the measurement of the serving base station's signals.

13. A serving base station (204) that is part of a heterogeneous radio access network (200), wherein the heterogeneous radio access network (200) further comprises a target base station (206), wherein the serving base station (204) is configured to control the handovers of a user equipment (202) to the target base station (206), the serving base station (204) being adapted to provide the user equipment (202) with a bias (208) to a measurement of signal strengths of the target base station's signals received by the user equipment (202), wherein the serving base station (204) is adapted to perform the following steps:
- receiving a report sent by the user equipment (202), the report comprising measured signal strength values resulting from the measurement of the biased target base station's signal strength (212) and the signal strength (214) of the serving base station's signals received at the user equipment (202),
- deciding the user equipment's handover to the target base station (206) based on an evaluation of the report,
- instructing the target base station (206) to instruct the user equipment (202) to change the bias (202) to be applied on the measurement of the signal strength (212) of the target base station's signals, wherein before applying the change to the bias (202) the biased target base station's signal strength is smaller than after applying the change to the biased target base station's signal strength,
- instructing the user equipment (202) to handover to the target base station (206), whereupon a handover from the serving base station (204) to the target base station (206) is executed by the user equipment (202).

14. A target base station (206) that is part of a heterogeneous radio access network (200), wherein the heterogeneous radio access network (200) further comprises a serving base station (204), the serving base station (204) providing the user equipment (202) with a bias to a measurement of signal strengths of the target base station's signals received by the user equipment (202), wherein the target base station (206) is adapted to perform the following steps:
- receiving from the serving base station (204) an instruction to instruct the user equipment (202) to change the bias (208) to be applied on the measurement of the signal strength of the target base station's signals thus producing a biased target base station's signal strength,
- receiving a handover of the user equipment (202) from the serving base station (204),
- sending the bias (208) to the user equipment (202),
- sending an instruction to the user equipment (202) instructing the user equipment (202) to change the bias (208) to be applied on the measurement of the target base station's signals,
wherein before applying the change to the bias (208) the biased target base station's signal strength Is smaller than after applying the change to the biased target base station's signal strength.

15. A user equipment (202) being servable by a serving base station (204) of a heterogeneous radio access network (200), wherein the heterogeneous radio access network (200) further comprises a target base station (206), wherein the user equipment (202) is configured to execute a handover from the serving base station (204) to the target base station (206) upon a serving base station's handover command, wherein the user equipment (202) is further configured to receive from the serving base station (204) a blas (208) to a measurement of signal strengths (212, 214) of signals received by the user equipment (202), the signals being transmitted by the serving base station (204) and the target base station (206), wherein the user equipment (202) is adapted to perform the following steps:
- sending a report to the serving base station (204), the report comprising measured signal strength (212) values resulting from the measurement of the biased target base station (206) signal strength (212) and the signal strength (214) of the serving base station's signals received at the user equipment (202),
- receiving a serving base station's decision for a handover of the user equipment (202) to the target base station (206) based on an evaluation of the report,
- executing the handover from the serving base station (204) to the target base station (206), wherein after the handover having been executed the target base station (206) is becoming the serving base station (204),
- receiving from the serving base station (204) an instruction to change the bias (208) to be applied on the measurement of the serving base station's signals, and in response changing the bias (208) in accordance with said instruction,
wherein before applying the change to the bias (208) the biased target base station's signal strength is smaller than after applying the change to the biased target base station's signal strength.
